# EUROPÄISCHE PATENTSCHRIFT

(11) **EP 1 842 653 B1**
(45) Veröffentlichungstag und Bekanntmachung des Hinweises auf die Patenterteilung: **03.12.2008**
(21) Anmeldenummer: 06112163.8
(22) Anmeldetag: 03.04.2006
(51) Int. Cl.: B29C 59/04, B32B 17/10

(54) **Verfahren zur Herstellung von geprägten Folien auf Basis von teilacetalisiertem Polyvinylalkohol**
Method of manufacturing embossed films of partially acetalised polyvinylalcohol
Procédé pour la fabrication de films gaufrés en alcool de polyvinyle partialement acétalisé

(43) Veröffentlichungstag der Anmeldung: 10.10.2007
(73) Patentinhaber: Kuraray Europe GmbH, 65926 Frankfurt am Main (DE)
(72) Erfinder: Stenzel, Holger, Dr., 53773, Hennef (DE); Offermann, Uwe, 53721 Siegburg (DE)
(74) Vertreter: Kisters, Michael Marcus

(56) Entgegenhaltungen:
- WO-A-01/30568
- GB-A- 1 271 188
- PATENT ABSTRACTS OF JAPAN Bd. 1996, Nr. 10, 31. Oktober 1996 (1996-10-31) & JP 08 143346 A (SEKISUI CHEM CO LTD), 4. Juni 1996 (1996-06-04)
- PATENT ABSTRACTS OF JAPAN Bd. 1996, Nr. 03, 29. März 1996 (1996-03-29) & JP 07 290569 A (SEKISUI CHEM CO LTD), 7. November 1995 (1995-11-07)
- PATENT ABSTRACTS OF JAPAN Bd. 016, Nr. 115 (M-1224), 23. März 1992 (1992-03-23) & JP 03 284935 A (SEKISUI CHEM CO LTD), 16. Dezember 1991 (1991-12-16)

## Beschreibung

Die Erfindung betrifft ein Verfahren zur Herstellung einer Folie auf Basis von teilacetalisiertem Polyvinylalkohol mit einer durch zweistufiges Prägen eingestellten Rauhigkeit der Oberflächen sowie die Verwendung der Folien zur Herstellung von Verbundglaslaminaten.

Verbundsicherheitsscheiben, bestehend aus zwei Glasscheiben und einer die Glasscheiben verbindenden Klebefolie auf Basis von teilacetalisiertem Polyvinylalkohol, bevorzugt aus Polyvinylbutyral (PVB) werden insbesondere als Windschutzscheiben in Kraftfahrzeugen eingesetzt, wobei gegebenenfalls eine Glasscheibe durch eine Kunststoffscheibe, ersetzt sein kann. Auch auf dem Bausektor, z.B. als Fensterscheiben oder als Zwischenwände, werden solche Silikatglas/Silikatglas- bzw. Silikatglas/Kunststoff-Verbunde eingesetzt, wobei gegebenenfalls je nach ihrer Verwendung, z.B. als Verbundpanzergläser, auch Mehrfachverbunde, also Verbunde, die aus mehr als zwei tragenden Schichten bestehen, eingesetzt werden.

### Stand der Technik

Weichmacherhaltige Folien auf Basis von teilacetalisiertem Polyvinylalkohol, insbesondere Polyvinylbutyral (PVB) zur Herstellung von Sicherheitsverbundgläsern sind bereits bei Raumtemperatur sehr weich und klebrig. Die hohe Klebrigkeit ist zwar unerlässlich für den Zusammenhalt des Verbundes Glas-Folie-Glas in Verbundgläsern, für den Transport und den Verarbeitungsprozess zu diesen Gläsern muss die Klebrigkeit jedoch vorübergehend beseitigt, zumindest aber unterdrückt werden. Die Eigenklebrigkeit der Folien kann durch eine gewisse Rauheit vermindert werden.

Des weiteren muss beim Verarbeiten der Folie zu Verbundsicherheitsglas die zwischen Folie und Glas befindliche Luft entfernt werden können. Hierzu ist es allgemein bekannt, die Folien ein- oder beidseitig mit einer aufgerauten Oberfläche zu versehen. Die bei der Herstellung des Glaslaminats eingeschlossene Luft kann über die aufgeraute Oberfläche entweichen, sodass ein blasenfreies Laminat erhalten wird.

Üblicherweise liegen die Rauhigkeitswerte einer solchen Zwischenfolie, gemessen als R_{z} nach DIN EN ISO 4287, zwischen 8 und 60 µm. Ein typisches Verfahren zur Herstellung von Folien mit aufgerauter Oberfläche ist aus der EP 0 185 863 B1 als Schmelzbruchverfahren bekannt. Schmelzbruchverfahren führen zu unregelmäßig (stochastisch) aufgerauten Oberflächen.

Weitere im Stand der Technik beschriebene Verfahren zur Herstellung einer aufgerauten Oberfläche sind Prägeverfahren. Gemeinsames Kennzeichen aller durch Prägeverfahren hergestellten Folienoberflächen ist eine regelmäßige, (nichtstochastische) Oberflächenstruktur, die vor allem im Herstellprozess von Glaslaminaten mit dem Vakuumsack-Verfahren ein gutes Entlüftungsverhalten zeigt und somit kurze Prozesszeiten und breite Verarbeitungsfenster ermöglicht.

Prägeverfahren haben im Vergleich zu Schmelzbruchverfahren den Vorteil, dass die erhaltene regelmäßige Oberflächenstruktur eine schnellere und einfachere Entlüftung bei der Laminatherstellung erlaubt.

EP 0 741 640 B1 beschreibt ein solches Prägeverfahren zur Herstellung einer beidseitig geprägten Oberfläche mittels zweier Prägewalzen, durch die die Folie mit einer regelmäßigen, sägezahnartigen Linienstruktur versehen wird. Die auf jeder Seite der Folie eingeprägten Linien kreuzen sich in einem Winkel >25°, so das ein sogenanntes Moire-Muster im Verbundglas verhindert wird. EP 1 233 007 A1 offenbart zur Vermeidung des Moire-Effektes ein Prägeverfahren, das eine regelmäßige, linienförmige Prägestruktur auf jeder Seite der Folie erzeugt. Zur Vermeidung von Interferenzen besitzen die Linienstrukturen der beiden Folienseiten unterschiedliche Wiederholfrequenzen.

Ein anderes, in US 5,972,280 beschriebenes Verfahren, verwendet zum Prägen der Oberflächenstrukturierung anstelle zweier Prägewalzen nur eine Walze und ein an der Walze über Rollen und Druckluft anliegendes strukturiertes Stahlband, wobei die Folie während des Prägevorgangs durch den Spalt zwischen Prägewalze und Stahlband geführt wird. US 4,671,913 offenbart ein Verfahren zur Prägung von PVB-Folien, wobei die Folie in einem einzigen Arbeitsgang zwischen zwei strukturierten Walzen geprägt wird. Die Walzen - und damit auch die geprägte Folie - besitzen eine Rauhigkeit R_{z} von 10 bis 60 µm.

GB 1271188 offenbart ein Verfahren zum Pressen von PVB-Folien in einem Wasserbad.

Die beschriebenen beidseitigen Prägeverfahren besitzen den Nachteil, dass bei einstufigem Prägen beider Seiten der Folien nur eine geringe Verweildauer im Walzenspalt erzielt werden kann. Dadurch nimmt die Prägung bei zunehmender Prägegeschwindigkeit stark ab, was für einen industriellen Fertigungsprozess unerwünscht ist. Zur Erhöhung der Verweilzeit kann zwar eine Folienseite um eine Prägewalze gewunden werden, sodass diese Folienseite länger Kontakt zur Prägewalze hat als die andere Seite. Dies vermindert die Präzision der Prägung bzw. es werden Folienseiten mit unterschiedlicher Prägetiefe erhalten.

Bei zweistufigen Verfahren, bei denen die beiden Folienseiten nacheinander geprägt werden, tritt dieser Effekt nicht auf. Hier besteht allerdings die Gefahr, dass die bereits geprägte Folienseite im zweiten Prägeschritt wieder egalisiert oder überprägt wird. Dies kann durch eine entsprechende Auswahl der Walzenoberflächen und des Prägedrucks unterdrückt werden. So beschreiben US 2003/0022015, WO 01/72509, US 6077374 und US 60934741 ein- und zweistufige Prägeverfahren für PVB-Folien mittels Prägewalzen aus Stahl und Anpresswalzen mit einer Gummibeschichtung. Die Gummibeschichtung bzw. die zwischen den Walzen auf die Folie aufgebrachte Kraft ist nicht näher beschrieben. Sind die Walzenoberflächen zu hart resultiert eine kleine Prägezone, die praktisch auf eine Linie reduziert ist. Dies führt zu einer niedrigen Verweildauer der Folie in der Prägezone und damit zu einer niedrigen Prägegeschwindigkeit. Werden dagegen zu weiche Walzenoberflächen verwendet, so kann nur eine unzureichende Kraft auf die Folie ausgeübt werden, so dass die Prägequalität sinkt.

Die bestehenden Verfahren sind in Bezug auf die Prägeleistung verbesserungsfähig.

Aufgabe der vorliegenden Erfindung war es daher, ein zweistufiges Verfahren zum Prägen von Folien auf Basis von teilacetalisiertem Polyvinylalkohol zu entwickeln, das diese Nachteile nicht aufweist.

Überraschenderweise wurde gefunden, dass die Prägung einer Folie auf Basis von acetalisiertem Polyvinylalkohol mit ausreichender Qualität und Geschwindigkeit zwischen Prägewalzen und Anpresswalzen einer bestimmten Shore-A-Härte möglich ist.

### Darstellung der Erfindung

Verfahren zum Prägen einer Folie auf Basis von teilacetalisiertem Polyvinylalkohol mit Rauhigkeiten der Oberflächen von jeweils unabhängig R_{z} = 20 bis 100 µm, bevorzugt R_{z} 30 bis 50 µm, durch die Verfahrensschritte
a. Bereitstellen einer Folie auf Basis von teilacetalisiertem Polyvinylalkohol mit einer Rauhigkeit der Oberflächen von R_{z} = 1 bis 70 µm, bevorzugt 1 bis 40 µm, insbesondere 1 bis 15 µm.
b. Prägen einer ersten Oberfläche der Folie aus a) zwischen einer entsprechend aufgerauten Prägewalze einer Temperatur von 80 bis 170 °C und einer Anpresswalze einer Temperatur von 0 bis 60 °C unter Erhalt einer Folie mit einer Rauhigkeit der geprägten Oberfläche von R_{z} = 20 bis 100 µm und
c. Prägen der zweiten Oberfläche der Folie aus b) zwischen einer entsprechend aufgerauten Prägewalze einer Temperatur von 80 bis 170 °C und einer Anpresswalze einer Temperatur von 0 bis 60 °C unter Erhalt einer Folie mit einer Rauhigkeit der geprägten Oberfläche von R_{z} = 20 bis 100 µm,
wobei die Anpresswalzen beider Prägestufen eine gleiche oder unterschiedliche Shore-A Härte von 50 - 80 aufweisen.

Das erfindungsgemäße Verfahren führt bevorzugt zu einer nichtstochastischen Rauhigkeit der Folien. Die Messung der Oberflächenrauhigkeit der Folien mit dem Rauhigkeitswert R_{z} erfolgt nach DIN EN ISO 4287 und DIN ISO 4288. Die zur Messung der Oberflächenrauhigkeit verwendeten Messgeräte müssen der EN ISO 3274 genügen. Die eingesetzten Profilfilter müssen der DIN EN ISO 11562 entsprechen.

Die Oberflächenstruktur bzw. Rauhigkeit der Folie gemäß Schritt a) kann z.B. durch das sogenannte Fließ- oder Schmelzbruchverfahren entsprechend der EP 0 185 863 B1, auf deren Inhalt hier ausdrücklich hingewiesen wird, aufgebracht werden. Unterschiedliche Rauhigkeitsniveaus können durch Variation der Austrittsspaltweite und der Düsen-Lippentemperaturen unmittelbar am Düsenaustritt gezielt erzeugt werden.

Es ist auch möglich, Folien durch Extrusion ohne Schmelzbruch herzustellen. Alternativ kann die Folie durch Extrusion und Glätten über gekühlte Walzen z.B. gemäß US 4,671,913 hergestellt werden. Im erfindungsgemäßen Verfahren ist der Einsatz der Folien mit einer möglichst geringen Rauhigkeit bevorzugt, da raue Strukturen nur mit höherem Prägeaufwand überprägt werden können. Weiterhin könnte sich die ursprüngliche Rauhigkeit bei der Vorverbundherstellung wieder einstellen, so dass die Vorteile einer geprägten Folie gegenüber einer durch Schmelzbruch aufgerauten Oberfläche gemindert wird.

In den anschließenden Prägeverfahren gemäß Schritt b) und c) wird die Folie auf jeder Seite jeweils unabhängig mit einer Oberflächenstruktur und einer Rautiefe von R_{z} = 20 bis 100 µm, bevorzugt R_{z} = 20 bis 80 µm, insbesondere R_{z} = 30 µm bis 50 µm versehen.

Das erfindungsgemäße Verfahren kann so durchgeführt werden, dass die Seiten der strukturierten Folie unterschiedliche Rautiefen R_{z} aufweisen. Dies kann z.B. durch verschiedene Werkzeuge oder Temperaturen der Prägewerkzeuge bzw. Anpresswalzen erreicht werden.

Vor und/oder nach den Prägevorgängen b) und c) kann die Folie jeweils auf -10 bis +20 °C abgekühlt und so die Oberflächenstruktur der Folie fixiert werden. Die Abkühlung erfolgt bevorzugt über entsprechend temperierte Kühlwalzen. Hier ist die sog. Vorderseitenkühlung möglich, d.h. die in den Verfahrensschritten b) und/oder c) geprägte Seite der Folie wird gekühlt. Alternativ ist die sog. Rückseitenkühlung, bei der die in den Verfahrensschritten b) und/oder c) nicht geprägte Seite der Folie gekühlt wird.

Die Kühlung der Folien kann auch auf deren Oberfläche beschränkt sein. So kann die Oberflächentemperatur der geprägten Seite der Folie der Folie vor Verfahrensschritt c) auf -10 bis +20 °C eingestellt werden. Alternativ kann die nicht-geprägte Oberfläche der Folie vor den Schritten b) und/oder c) auf diese Temperatur eingestellt werden.

Die Prägewalzen sind bevorzugt aus Metall hergestellt und besitzen eine Oberfläche mit einer negativen Profilierung der später in der Folienoberflächen befindlichen Struktur. Die im erfindungsgemäßen Verfahren eingesetzten Prägewalzen müssen eine der angestrebten Rauheit der Folie entsprechende Rauheit aufweisen. In einer Verfahrensvariante besitzen die geprägte Folie und die Prägewalzen die gleiche oder nahezu eine gleiche Rauheit. In Abhängigkeit der Verfahrensparameter Folientemperatur, Liniendruck, Walzentemperatur, Walzengeschwindigkeit oder Foliengeschwindigkeit kann die Rauhigkeit der geprägten Folie auch erheblich geringer sein als die der Prägewalzen. So kann die Rauhigkeit R_{z} der Prägewalzen 400 %, bevorzugt, 300 %, insbesondere 100 % über der Rauhigkeit R_{z} der mit dieser Walze geprägten Folienoberflächen liegen. Die Temperatur der Prägewalzen beträgt 80 bis 170 °C, bevorzugt 100 bis 150 °C und insbesondere 110 bis 140 °C. Besonders bevorzugt besitzen die Prägewalzen eine beschichtete Stahloberfläche (z.B. PTFE), um das Kleben der Folie zu reduzieren.

Im erfindungsgemäßen Verfahren wird die Folie zwischen die Prägewalze und die gegenläufig rotierenden Anpresswalze geführt. Bevorzugt wird die Folie zwischen den Prägewalzen und Anpresswalzen der Verfahrensschritte b) und/oder c) einem Liniendruck von 20 bis 80 N/mm, insbesondere 40 bis 65 N/mm ausgesetzt. Der Liniendruck kann in den Verfahrensschritten b) und c) gleich oder unterschiedlich sein. Unter dem Liniendruck wird die Anpresskraft des Walzenpaars, bezogen auf die Folienbreite, verstanden.

Die Anpresswalzen weisen Temperaturen von 0 bis 60 °C, bevorzugt 10 bis 40 °C auf d.h. werden gegenüber der Prägewalze aktiv gekühlt. Die Temperatur der Anpresswalzen kann in den Verfahrensschritten b) und c) gleich oder unterschiedlich sein.

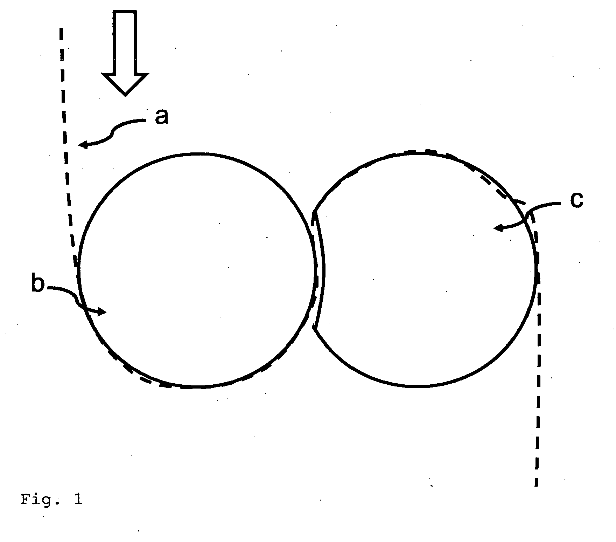

Die Anpresswalzen besitzen keine oder nur eine geringe Rauheit (R_{z} max. 10 µm) und bestehen bevorzugt aus einem Metallkern mit einer Oberfläche aus Kautschuk oder EPDM. Die Oberflächen der Anpresswalzen weisen insbesondere eine Shore-A Härte von 60 bis 75 auf. Die Anpresswalzen drücken die Folie in die strukturierte Oberfläche der Prägewalzen und schmiegen sich dabei leicht an die Prägewalze an. Durch die Veränderung des Liniendrucks kann die Fläche der Prägezone und damit die Verweildauer der Folie im Walzenspalt verändert werden. Dies ist schematisch in Fig. 1 dargestellt, wobei mit a) die zu prägende Folie, b) die Präge- und c) die Anpresswalze bezeichnet wird. Neben der hier gezeigten Führung der Folie um die Walzen herum ist auch die einfache Führung der Folie durch den Walzenspalt ohne Umschlingen der Walzen möglich.

Durch Wahl der Verfahrensparameter Liniendruck, Folien- und/oder Walzentemperaturen, Walzengeschwindigkeit und Umschlingungswinkel der Folienbahn auf den Walzen kann bei vorgegebener Rautiefe der Prägewalzen die Rautiefe der Folienprägung beeinflusst werden.

Die Qualität des Prägevorgangs hängt auch von der Temperaturkonstanz der Folie und damit der Kühl-, Anpress- und Prägewalzen ab. Bevorzugt wird daher die Temperaturdifferenz der Präge- und/oder Anpresswalzen über deren Breite und Umfang kleiner 2°C, insbesondere kleiner 1 °C eingestellt.

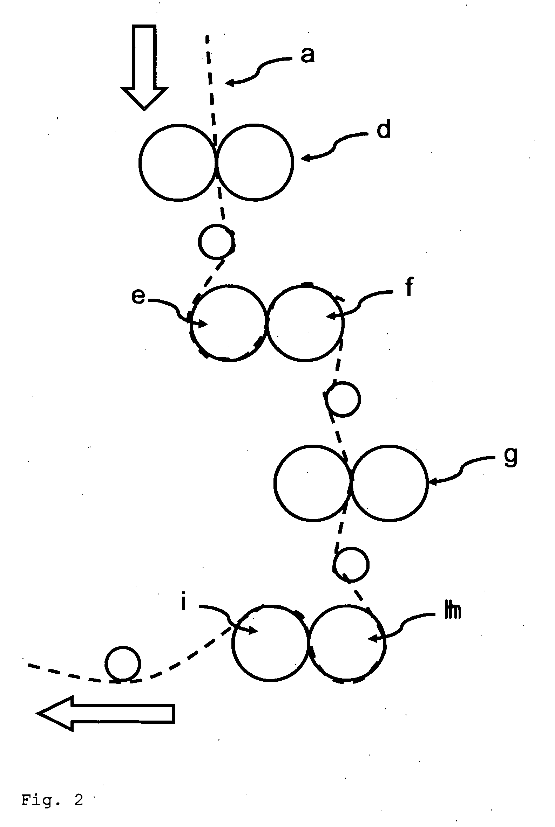

Fig. 2 zeigt schematisch eine Variante des erfindungsgemäßen Verfahrens. Die Laufrichtung der Folie ist mit Doppelpfeilen gekennzeichnet. Die mit einer geringen Rauhigkeit versehene Folie (a) wird optional im Walzenpaar (d) temperiert und zwischen der Prägewalze (e) und der Anpresswalze (f) einseitig geprägt. (e) und (f) sind wie bereits beschrieben temperiert. Anschließend kann die Temperatur der so einseitig geprägten Folie im Walzenpaar (g) eingestellt werden. Die zweite Oberfläche der Folie wird mittels der wiederum temperaturkontrollierten Prägewalze (h) und Anpresswalze (i) geprägt. Die in Fig. 2 nicht bezeichneten Walzen dienen der Führung der Folie. Zur besseren Temperatureinstellung können die Walzenpaare d) und g) auch von der Folie umschlungen werden, so dass die Verweilzeit der Folie auf den Walzen erhöht wird.

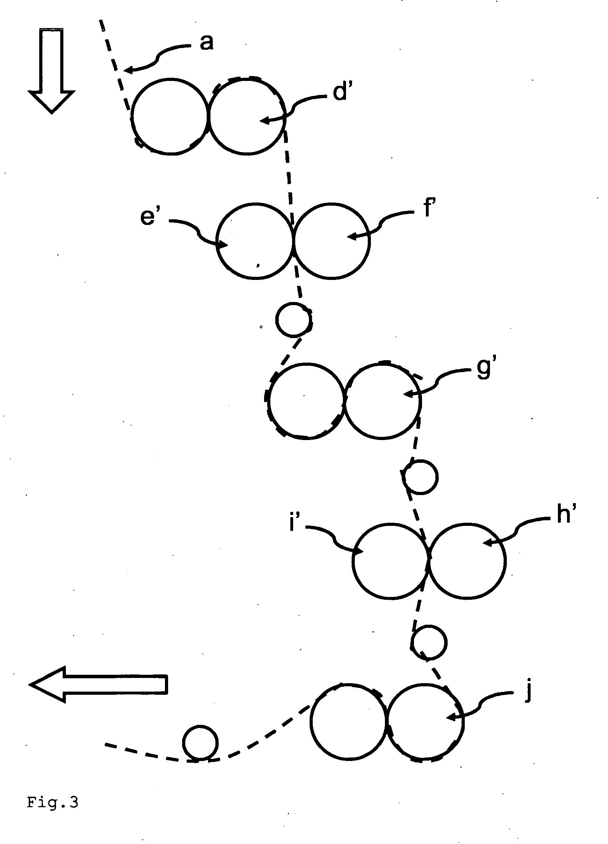

Fig. 3 zeigt eine weitere Variante des erfindungsgemäßen Verfahrens. Hier wird die Folie (a) nach optionalem Temperieren im Walzenpaar d' auf einer Seite zwischen der Prägewalze (e) und der Anpresswalze (f) geprägt und anschließend ein- oder beidseitig im Walzenpaar (g') temperiert. Die zweite Seite der Folie wird anschließend zwischen der Prägewalze (h') und Anpresswalze (i') geprägt. Mittels der Kühlwalzen (j) wird die Oberflächenstruktur fixiert.

Auch hier kann die Folie durch den Walzenspalt der Temperierwalzen direkt d.h. ohne Umschlingen geführt werden.

Als teilacetalisierter Polyvinylalkohol kann insbesondere Polyvinylbutyral (PVB), in vernetzter oder unvernetzter Form, jeweils in Gemisch mit mindestens einem Weichmacher, Farbstoffen, Pigmenten, Metallsalzen zur Haftungsregulierung, organischen Additiven und/oder anorganischen Füllstoffen eingesetzt werden.

Als Weichmacher für die teilacetalisiertem Polyvinylalkohole eignen sich zum einen alle nach dem Stand der Technik zu diesem Zweck bekannten Weichmacher, insbesondere die Ester von mehrwertigen Säuren, mehrwertigen Alkoholen oder Oligoetherglykolen, wie z. B. Adipinsäureester, Sebazinsäureester oder Phthalsäureester, insbesondere Di-n-hexyladipat, Dibutylsebazat, Dioctylphthalat, Ester von Di-, Tri- oder Tetraglykolen mit linearen oder verzweigten aliphatischen Carbonsäuren und Mischungen dieser Ester. Als Standardweichmacher für teilacetalisierte Polyvinylalkohole, insbesondere Polyvinylbutyral, werden bevorzugt Ester von aliphatischen Diolen mit langkettigen aliphatischen Carbonsäuren, insbesondere Ester von Triethylenglykol mit 6 bis 10 C-Atomen enthaltenden aliphatischen Carbonsäuren, wie 2-Ethylbuttersäure oder n-Heptansäure eingesetzt. Besonders bevorzugt sind ein oder mehrere Weichmacher aus der Gruppe bestehend aus Di-n-hexyladipat (DHA), Dibutylsebazat (DBS), Dioctylphthalat (DOP), Ester von Di-, Tri- oder Tetraglykolen mit linearen oder verzweigten aliphatischen Carbonsäuren, insbesondere Triethylenglykol-bis-2-ethylbutyrat (3GH), Triethylenglykol-bis-n-heptanoat (3G7), Triethylenglykol-bis-2-ethylhexanoat (3G8), Tetraethylenglykol-bis-n-heptanoat (4G7).

In einer besonderen Ausführungsform der vorliegenden Erfindung kann die Haftung der Folie an den Prägewerkzeugen weiter vermindert werden, indem dem Folienmaterial eine die Haftkraft vermindernde Substanz zugesetzt wurde.

Als haftungsreduzierendes organisches Additiv können z.B. 0.01 bis 2 Gew.%, bezogen auf die Gesamtmischung, Pentaerythrite der Formel I 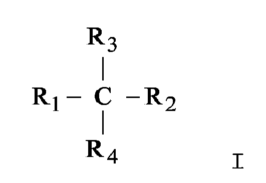 wobei R₁, R₂, R₃, R₄ jeweils gleich oder verschiedenen für Reste der Gruppe -CH₂OH, -CH₂OR₅, -CH₂OCOR₅ oder -CH₂OCO-R₆-COOR₅, stehen und R₅, R₆ für gesättigte oder ungesättigte, verzweigte oder unverzweigte Kohlenwasserstoffreste mit 1 bis 26 Kohlenstoffatome stehen,
zugesetzt werden.

Die als optionaler Zusatz verwendeten Pentaerythrite bzw. deren Ester erleichtern bei Einsatz von teilacetalisiertem Polyvinylalkoholen als polymerem Material aber auch den Einsatz von Spezialweichmachern, die z. B. eine verbesserte Schalldämmung der Folien bewirken, siehe auch die DE 199 38 159 A1, auf deren Inhalt hiermit vollinhaltlich bezug genommen wird. Zu den Spezialweichmachern zählt insbesondere die Gruppe von Weichmachern bestehend aus
- Polyalkylenglykolen der allgemeinen Formel
   HO-(R-O)ₙ-H mit R = Alkylen und n > 5,
- Blockcopolymeren aus Ethylen- und Propylenglykol der allgemeinen Formel HO-(CH₂-CH₂-O)ₙ-(CH₂-CH(CH₃)-O)ₘ-H mit n > 2, m > 3 und (n+m) < 25,
- Derivaten von Blockcopolymeren aus Ethylen- und Propylenglykol der allgemeinen Formel R₁O-(CH₂-CH₂-O)ₙ-(CH₂-CH(CH₃)-O)ₘ-H bzw. HO-(CH₂-CH₂-O)ₙ-(CH₂-CH(CH₃)-O)ₘ-R₁ mit n>2, m > 3 und (n+m) < 25 und R₁ als organischem Rest,
- Derivate von Polyalkylenglykolen der allgemeinen Formel
   R₁-O-(R₂-O)ₙ-H mit R₂ = Alkylen und n ≥ 2, bei denen der Wasserstoff von einer der beiden terminalen Hydroxygruppen des Polyalkylenglykols durch einen organischen Rest R₁ ersetzt ist,
- Derivate von Polyalkylenglykolen der allgemeinen Formel
   R₁-O-(R₂-O)ₙ-R₃ mit R₂ = Alkylen und n > 5, bei denen der Wasserstoff bei der terminaler Hydroxygruppen des Polyalkylenglykols durch einen organischen Rest R₁ bzw. R₃ ersetzt ist.

Diese Spezialweichmacher werden bevorzugt bei teilacetalisiertem Polyvinylalkoholen, hier insbesondere PVB, in Kombination mit einem oder mehreren Standardweichmachern in einem auf die Weichmacher bezogenen Anteil von 0,1 bis 15 Gew. % eingesetzt.

Das plastifizierte teilacetalisierte Polyvinylalkohol-Harz enthält vorzugsweise 25 bis 45 Gewichtsteile und besonders bevorzugt 30 bis 40 Gewichtsteile Weichmacher, bezogen auf 100 Gewichtsteile Harz.

Die teilacetalisiertem Polyvinylalkohole werden in bekannter Weise durch Acetalisierung von hydrolysierten Polyvinylestern hergestellt. Als Aldehyde können beispielsweise Formaldehyd, Acetaldehyd, Propionaldehyd, Butyraldehyd u. dgl., bevorzugt Butyraldehyd, verwendet werden.

Das bevorzugte Polyvinylbutyral-Harz enthält 10 bis 25 Gew.-%, vorzugsweise 17 bis 23 Gew.-% und besonders bevorzugt 19 bis 21 Gew.-% Vinylalkoholreste bzw. 0 bis 20 Gew.-%, bevorzugt 0,5 bis 2,5 Gew.-% Acetatreste.

In einer weiteren Verfahrensvariante wird als Polymer ein mit einem Polyaldehyd (insbesondere Glutaraldehyd) und einer Oxocarbonsäure (insbesondere Glyoxylsäure) anvernetztes PVB gemäß WO 2004/063231 A1 eingesetzt. Ein solches anvernetztes PVB weist eine um 10 bis 50 % erhöhte Viskosität gegenüber dem analogen, nicht vernetzten PVB auf.

Der Wassergehalt der Folien wird bevorzugt auf 0,15 bis 0,8 Gew.-%, insbesondere auf 0,3 bis 0,5 Gew.-% eingestellt.

Die erfindungsgemäß hergestellten Folien können insbesondere bei der Herstellung von Laminaten aus einer oder mehreren Glasscheiben und/oder einer oder mehreren Kunststoffscheiben und mindestens einer strukturierten Folie verwendet werden.

Bei der Herstellung dieser Laminate wird zunächst aus den Glas/Kunststoffscheiben und der Folie ein Vorverbund mittels Pressen, Vakuumsack oder Vakuumlippe hergestellt. Vorverbundlaminate sind in der Regel noch durch Lufteinschlüsse leicht getrübt. Die endgültige Herstellung des Laminats erfolgt im Autoklaven, z.B. gemäß WO 03/033583.

### Beispiel:

Es wurde eine weichmacherhaltige PVB-Folie aus 72,5 Gew.% PVB, 25,0 Gew. % 3G8 mit Kalium- und Magnesiumsalzen als Antihaftmittel mit einer beidseitigen Rauheit R_{z} < 5 µm auf einer Anlage gemäß Fig. 3 geprägt. Die Anpress- und Prägewalzen der beiden Prägestufen wiesen identische Eigenschaften auf.

### Anlagenparameter:

| | |
|---|---|
| Prägewalzendurchmesser: | 245 mm |
| Härte Gummiwalze | 70 ± 5 Shore-A |
| Gummiwalzendurchmesser: | 255 mm |
| Rauhigkeit Prägewalze: | ca. 80 µm |
| Oberflächen-Beschichtung: | PTFE |

Es wurden Folien mit den folgenden Prägeeigenschaften erhalten:

| Nr. | Liniengeschwindigkeit (m/min) | Liniendruck (N/mm) | T Prägewalze (°C) | T Gummiwalze (°C) | R_{z} (µm) Oberseite | R_{z} (µm) Unterseite |
|---|---|---|---|---|---|---|
| 1 | 1,34 | 32 | 100 | 10 | 30 | 32 |
| 2 | 1,42 | 48 | 100 | 10 | 45 | 45 |
| 3 | 2,3 | 50 | 110 | 10 | 40 | 40 |
| 4 | 2,75 | 40 | 110 | 10 | 48 | 38 |
| 5 | 6,0 | 60 | 110 | 10 | 38 | 44 |

Um gleiche Rauhigkeiten auf beiden Folienseiten zu erzielen, kann es auch erforderlich sein, in beiden Prägestufen unterschiedliche Parameter zu verwenden, wie im folgenden Beispiel dargestellt:

| Nr. | Liniengeschwindigkeit (m/min) | Liniendruck (N/mm) OS (US) | T Prägewalze (°C) OS (US) | T Gummiwalze (°C) | R_{z} (µm) Oberseite | R_{z} (µm) Unterseite |
|---|---|---|---|---|---|---|
| 6 | 2,3 | 70 (80) | 120 (125) | 10 | 90 | 90 |

Die Folien wiesen bei der Verbundglasherstellung gute Entlüftungseigenschaften auf und konnten zu blasenfreien Laminaten verarbeitet werden.

### Vergleichsversuch:

Anstelle von Gummiwalzen mit der erfindungsgemäßen Shore-A-Härte wurden Stahlwalzen eingesetzt.

Selbst bei Verwendung von zwei beschichteten Prägewalzen neigt die Folie zum Kleben auf einer der Walzen, da kein definierter Abnahmepunkt vorhanden ist. Des Weiteren wird die Folie bereits ab Geschwindigkeiten von ca. 3m/min einseitig glatt, da die Verweildauer im Prägespalt zu gering ist.

Es wurden keine für die Verbundglasherstellung verwendbaren Folien erhalten bzw. für industrielle Zwecke ist ein solches Verfahren ungeeignet.

## Patentansprüche

1. Verfahren zum Prägen einer Folie auf Basis von teilacetalisiertem Polyvinylalkohol mit Rauhigkeiten der Oberflächen von jeweils unabhängig R_{z} = 20 bis 100 µm, durch die Verfahrensschritte
a. Bereitstellen einer Folie auf Basis von teilacetalisiertem Polyvinylalkohol mit einer Rauhigkeit der Oberflächen von R_{z} = 1 bis 70 µm
b. Prägen einer ersten Oberfläche der Folie aus a) zwischen einer entsprechend aufgerauten Prägewalze einer Temperatur von 80 bis 170 °C und einer Anpresswalze einer Temperatur von 0 bis 60 °C unter Erhalt einer Folie mit einer Rauhigkeit der geprägten Oberfläche von R_{z} = 20 bis 100 µm und
c. Prägen der zweiten Oberfläche der Folie aus b) zwischen einer entsprechend aufgerauten Prägewalze einer Temperatur von 80 bis 170 °C und einer Anpresswalze einer Temperatur von 0 bis 60 °C unter Erhalt einer Folie mit einer Rauhigkeit der geprägten Oberfläche von R_{z} = 20 bis 100 µm, wobei die Anpresswalzen beider Prägestufen eine gleiche oder unterschiedliche Shore-A Härte von 50 - 80 aufweisen.

2. Verfahren nach Anspruch 1, **dadurch gekennzeichnet, dass** die Folie zwischen den Prägewalzen und Anpresswalzen der Verfahrensschritte b) und c) einem Liniendruck von 20 bis 80 N/mm ausgesetzt ist.

3. Verfahren nach Anspruch 1 oder 2, **dadurch gekennzeichnet, dass** die Oberflächen der Anpresswalzen aus Kautschuk oder EPDM bestehen.

4. Verfahren nach einem der Anspruche 1 bis 3, **dadurch gekennzeichnet, dass** die Temperaturdifferenz der Prägewalzen kleiner 2 °C über die Breite und Umfang der Walzen ist.

5. Verfahren nach einem der Ansprüche 1 bis 4, **dadurch gekennzeichnet, dass** die Temperaturdifferenz der Anpresswalzen kleiner 2 °C über die Breite und Umfang der Walzen ist.

6. Verfahren einem der Ansprüche 1 bis 5, **dadurch gekennzeichnet, dass** die Oberflächen der geprägten Folie jeweils unabhängig eine Rauhigkeit R_{z} von 20 bis 80 µm aufweisen.

7. Verfahren nach einem der Ansprüche 1 bis 6, **dadurch gekennzeichnet, dass** die Temperatur der Folie vor und/oder nach den Verfahrensschritten b) und c) auf -10 bis +20°C eingestellt wird.

8. Verfahren nach einem der Ansprüche 1 bis 7, **dadurch gekennzeichnet, dass** die in den Verfahrensschritten b) und/oder c) geprägte Seite der Folie gekühlt wird.

9. Verfahren nach einem der Ansprüche 1 bis 7, **dadurch gekennzeichnet, dass** die in den Verfahrensschritten b) und/oder c) nicht geprägte Seite der Folie gekühlt wird

## Claims

1. A method for embossing a foil based on partially acetalised polyvinyl alcohol with surface roughnesses of in each case independently R_{z} = 20 to 100 µm, by means of the method steps
a. preparing a foil based on partially acetalised polyvinyl alcohol with a surface roughness of R_{z} = 1 to 70 µm
b. embossing a first surface of the foil from a) between a correspondingly roughened embossing roller at a temperature of 80 to 170 °C and a pressure roller at a temperature of 0 to 60 °C to obtain a foil with a embossed surface roughness of R_{z} = 20 to 100 µm and
c. embossing the second surface of the foil from b) between a correspondingly roughened embossing roller at a temperature of 80 to 170 °C and a pressure roller at a temperature of 0 to 60 °C to obtain a foil with a embossed surface roughness of R_{z} = 20 to 100 µm,
with the pressure roller of both embossing stages having an identical or different Shore A hardness of 50 - 80.

2. The method according to Claim 1, **characterised in that** the foil is subjected to a linear pressure of 20 to 80 N/mm between the embossing rollers and pressure rollers of method steps b) and c).

3. The method according to Claim 1 or 2, **characterised in that** the surfaces of the pressure rollers consist of rubber or EPDM.

4. The method according to one of Claims 1 to 3, **characterised in that** the temperature difference of the embossing rollers is less than 2 °C over the width and circumference of the rollers.

5. The method according to one of Claims 1 to 4, **characterised in that** the temperature difference of the pressure rollers is less than 2 °C over the width and circumference of the rollers.

6. The method according to one of Claims 1 to 5, **characterised in that** the surfaces of the embossed foil have in each case independently a roughness R_{z} of 20 to 80 µm.

7. The method according to one of Claims 1 to 6, **characterised in that** the temperature of the foil before and/or after the method steps b) and c) is set to -10 to +20 °C.

8. The method according to one of Claims 1 to 7, **characterised in that** the side of the foil which is embossed in the method steps b) and/or c) is cooled.

9. The method according to one of Claims 1 to 7, **characterised in that** the side of the foil which is not embossed in the method steps b) and/or c) is cooled.

## Revendications

1. Procédé pour estamper un film à base d'alcool polyvinylique partiellement acétalisé avec des rugosités des surfaces de respectivement indépendamment R_{z} = 20 à 100 µm, comportant les étapes de procédé consistant à :
a. fournir un film à base d'alcool polyvinylique partiellement acétalisé avec une rugosité de surface de R_{z} = 1 à 70 µm
b. estamper une première surface du film à partir de a) entre un rouleau d'estampage décapé à une température de 80 à 170°C et un rouleau de pressage à une température de 0 à 60°C en obtenant un film avec une rugosité de la surface estampée de R_{z} = 20 à 100 µm et
c. estamper la deuxième surface du film à partir de b) entre un rouleau d'estampage décapé à une température de 80 à 170 °C et un rouleau de pressage à une température 0 à 60°C en obtenant un film avec une rugosité de la surface estampée de R_{z} = 20 à 100 µm, dans lequel
les rouleaux de pressage des deux stades d'estampage présentent une dureté Shore A similaire ou différente de 50-80.

2. Procédé selon la revendication 1, **caractérisé en ce que** le film est exposé entre les rouleaux d'estampage et les rouleaux de pressage des étapes de procédé b) et c) à une pression de ligne de 20 à 80 N/mm.

3. Procédé selon la revendication 1 ou 2, **caractérisé en ce que** les surfaces des rouleaux de pressage sont constituées de caoutchouc ou d'EPDM.

4. Procédé selon une des revendications 1 à 3, **caractérisé en ce que** la différence de température des rouleaux d'estampage est inférieure à 2°C sur la largeur et la circonférence des rouleaux.

5. Procédé selon une des revendications 1 à 4, **caractérisé en ce que** la différence de température des rouleaux de pressage est inférieure à 2°C sur la largeur et la circonférence des rouleaux.

6. Procédé selon une des revendications 1 à 5, **caractérisé en ce que** les surfaces des films estampés présentent respectivement indépendamment une rugosité R_{z} de 20 à 80 µm.

7. Procédé selon une des revendications 1 à 6, **caractérisé en ce que** la température du film est réglée avant et/ou après les étapes de procédé b) et c) à -10 à =20°C.

8. Procédé selon une des revendications 1 à 7, **caractérisé en ce que** le côté estampé du film aux étapes de procédé b) et/ou c) est refroidi.

9. Procédé selon une des revendications 1 à 7, **caractérisé en ce que** le côté non estampé du film aux étapes de procédé b) et/ou c) est refroidi.
